# EUROPÄISCHE PATENTSCHRIFT

(11) **EP 2 781 332 B1**
(45) Veröffentlichungstag und Bekanntmachung des Hinweises auf die Patenterteilung: **20.04.2016**
(21) Anmeldenummer: 14154218.3
(22) Anmeldetag: 06.02.2014
(51) Int. Cl.: B29C 45/27, B29C 45/28

(54) **Spritzgießdüse mit zweiteiligem Materialrohr**
Injection nozzle with two-part material pipe
Buse de moulage par injection dotée d'un tube de matériau en deux parties

(30) Priorität: 21.03.2013 DE 102013102925
(43) Veröffentlichungstag der Anmeldung: 24.09.2014
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- EP-A1- 1 990 175
- WO-A1-01/34365
- WO-A1-97/02129
- WO-A1-2004/085131

## Beschreibung

Die Erfindung betrifft eine Spritzgießdüse gemäß dem Oberbegriff von Anspruch 1.

Spritzgießdüsen, insbesondere Heißkanal- oder Kaltkanaldüsen sind allgemein bekannt. Sie werden in Spritzgießwerkzeugen eingesetzt, um eine fließfähige Masse bei einer vorgebbaren Temperatur unter hohem Druck einem trennbaren Werkzeugblock (Formnest) zuzuführen. Damit sich beispielsweise eine heiße Kunststoffmasse innerhalb der Düse nicht vorzeitig abkühlt, ist - wie aus DE 295 01 450 U1 hervorgeht - eine elektrische Heizvorrichtung vorgesehen, welche ein Materialrohr mit einem darin ausgebildeten Strömungskanal konzentrisch umgibt. Hierdurch soll der flüssige Kunststoff auf einer gewünschten Temperatur gehalten werden. Zur Erfassung und Regelung der Temperatur verwendet man Thermofühler.

Das Materialrohr und die Heizvorrichtung sind gewöhnlich als separate Bauelemente ausgeführt, um die Heizvorrichtung bei einem Defekt austauschen zu können. Dabei ist das eigentliche Heizelement, ein elektrischer Widerstand, gemeinsam mit dem Thermofühler in eine Ummantelung integriert. Diese wird umfangsseitig auf das Materialrohr aufgesteckt. Die Ummantelung kann, wie z.B. in DE 89 15 318 U1, DE 295 07 848 U1 oder US 4,558,210 offenbart, ein starres Gebilde sein, das mittels Halte- bzw. Spannelementen auf dem Materialrohr in axialer Richtung festlegbar ist. Oder man verwendet flexible Heizstreifen bzw. -matten, die auf dem Außenumfang des Materialrohrs fixiert werden (siehe EP 0 028 153 B1 oder WO 97/03540).

Ein wesentlicher Nachteil dieser generell mechanisch lösbaren Heizvorrichtungen besteht in dem meist wenig effizienten Wärmeübergang von der Heizvorrichtung auf das Materialrohr. Insbesondere im Bereich der Düsenspitze, welche der kalten Werkzeugseite, d.h. der Formplatte, am nächsten kommt, wird der notwendige Temperatureintrag durch die Heizvorrichtung oftmals nicht erreicht. Entsprechend liegt keine lineare Temperaturverteilung über die Länge des Materialrohrs vor, was die Qualität der zu fertigenden Teile negativ beeinflussen kann. Nur mit relativ hohem Aufwand sind eine ausreichende Leistungsdichte und damit gleichbleibende Temperaturen auch an der Düsenspitze erzielbar.

So ist aus dem Stand der Technik bekannt, im Bereich der Düsenspitze eingesetzte Düsenmundstücke hinsichtlich der Wärmeeinleitung zu verbessern. Hierzu schlägt beispielsweise DE 10 2009 025 164 A1 vor, ein hoch wärmeleitendes Element aus pyrolytischem Graphit in das Düsenmundstück zu integrieren. Derartige Düsenmundstücke sind jedoch sehr teuer. Außerdem ist die Gestaltungsfreiheit sehr eingeschränkt, da pyrolytisches Graphit Wärme aufgrund seiner Kristallstruktur nur in einer einzigen linearen Achsrichtung leitet. Probleme resulitieren außerdem aus der geringen Festigkeit und schlechten Bearbeitbarkeit des Graphits.

Aus der WO97/02129 ist eine Spritzgießdüse mit einem zweiteiligen Materialrohr nach dem Oberbegriff des Anspruchs 1 bekannt. Um die Temperaturdifferenz zwischen beheiztem und unbeheiztem Düsenteil zu verringern, ist der Rohrabschnitt mit der Austrittsöffnung als temperaturausgleichendes Element ausgeführt, welches dazu Wärmeleitung, Wärmeisolation oder Wärmreflexion oder eine Kombination aus diesen ausnutzt. Für den Fall des Temperaturausgleiches durch Wärmeleitung werden Kupfer oder Stahl als Materialien temperaturausgleichende Element genannt.

Die WO 2004/085131 zeigt ein Materialrohr mit einem Düsenspitzenhalter, der eine höhere Wärmeleitfähigkeit aufweist als die Düsenspitze.

Aufgabe der Erfindung ist es, diese und weitere Nachteile des Standes der Technik zu überwinden und eine Spritzgießdüse für ein Spritzgießwerkzeug zu schaffen, mit der im Bereich der Düsenspitze eine hohe Wärmeübertragung von der Heizvorrichtung auf im Materialrohr bzw. durch das Düsenmundstück strömende fluidisierte Masse möglich ist. Die Spritzgießdüse soll mit einfachen Mitteln kostengünstig herstellbar und rasch zu montieren sein.

Hauptmerkmale der Erfindung sind im kennzeichnenden Teil von Anspruch 1 angegeben. Ausgestaltungen sind Gegenstand der Ansprüche 2 bis 16.

Die Erfindung betrifft eine Spritzgießdüse nach Anspruch 1.

Der Vorteil der erfindungsgemäßen Materialwahl liegt darin, dass der temperaturkritische Abschnitt der Spritzgießdüse, nämlich der Materialrohrabschnitt im Bereich der Austrittsöffnung, Wärme besonders schnell und effizient von der Heizvorrichtung auf durchströmende fluidisierte Masse, insbesondere einen Kunststoff, übertragen kann. Durch die schnelle Wärmeableitung ist eine höhere Heizleistung der Heizvorrichtung in diesem Bereich möglich, ohne dass die Heizvorrichtung durchbrennt. Etwaige Materialmehrkosten können auf den zweiten Rohrabschnitt beschränkt werden. Die erfindungsgemäße Ausbildung erlaubt es zudem, die Heizvorrichtung unmittelbar mit dem zweiten Rohrabschnitt thermisch zu koppeln, insbesondere durch eine flächige Anlage zwischen der Heizvorrichtung und dem zweiten Rohrabschnitt. Eine verringerte Heizleistung wie im Stand der Technik durch eine nur mittelbare Übertragung von Wärme über ein Materialrohr auf ein besser wärmeleitendes Düsenmundstück kann vermieden werden.

Eine kostengünstige und praktikable Ausgestaltung der Erfindung sieht vor, dass der erste Rohrabschnitt aus einem Werkzeugstahl besteht, insbesondere aus einem hochchromhaltigen Werkzeugstahl. Gemäß einer speziellen Variante besteht der zweite Rohrabschnitt aus einer Molybdän-Legierung und/oder Titan und/oder Zirkonium, insbesondere aus einem Titan-Zirkon-Molybdän. Höhere Materialkosten und ein erhöhter Bearbeitungsaufwand beschränken sich mithin auf den zweiten Rohrabschnitt.

In den meisten Anwendungsfällen bietet sich eine nähere Ausgestaltung des ersten Rohrabschnitts derart an, dass dieser einen Düsenkopf auf der Seite der Eintrittsöffnung aufweist. Mit einem solchen Düsenkopf ist eine Spritzgießdüse an einem Verteiler oder einer Maschinendüse dichtend festlegbar. Denkbar sind jedoch auch einteilige Ausführungsformen des ersten Rohrabschnitts mit einer Verteilerplatte eines Verteilers.

Gemäß der Erfindung ragt der erste Rohrabschnitt an der Koppelstelle in den zweiten Rohrabschnitt hinein. Damit wird eine besonders große äußere Mantelfläche am zweiten Rohrabschnitt geschaffen, über welche entsprechend eine hohe Wärmemenge von der Heizvorrichtung abgeleitet werden kann.

Ferner ist von einer Variante der Erfindung vorgesehen, dass der erste Rohrabschnitt an der Koppelstelle ein Außengewinde aufweist, das in ein Innengewinde des zweiten Rohrabschnittes eingreift. Mithin sind keine zusätzlichen Koppelmittel erforderlich und es wird eine stabile belastbare Verbindung zwischen den beiden Rohrabschnitten geschaffen. Eine derartige Schraubverbindungen eignet sich außerdem sehr gut, um Dichtflächen der Rohrabschnitte mit einer Anpresskraft zu belasten.

In einer speziellen Ausgestaltung verfügt der erste Rohrabschnitt an der Koppelstelle über eine stirnseitige Dichtfläche und der zweite Rohrabschnitt weist eine korrespondierende Dichtfläche auf. Derartige Dichtflächen sind geeignet, die Materialrohrabschnitte dichtend miteinander zu verbinden. Insbesondere in Kombination mit einer Schraubverbindung ist die stirnseitige Dichtfläche senkrecht in Richtung der korrespondierenden Dichtfläche belastbar. Zwischen den Dichtflächen kann ein Dichtring vorgesehen sein.

Um ideale Strömungsverhältnisse im Strömungskanal zu erreichen, sieht eine Fortentwicklung vor, dass die Innenwandungen des ersten und des zweiten Rohrabschnitts im Bereich der Koppelstelle, insbesondere an der inneren Nahtstelle, koaxial zueinander sind und den gleichen Innendurchmesser aufweisen. Fertigungstechnisch besonders bevorzugt sind die Innenwandungen im Bereich der Koppelstellen, insbesondere beidseits der inneren Nahtstelle, zylindrisch.

Eine einfache und kostengünstige Heizvorrichtung mit guter Wärmeübertragung auf das Materialrohr gelingt insbesondere dann, wenn die äußeren Mantelflächen des ersten und des zweiten Rohrabschnitts im Bereich der Koppelstelle, insbesondere an der äußeren Nahtstelle, koaxial zueinander sind und den gleichen Außendurchmesser aufweisen. Bevorzugt ist die äußere Mantelfläche beidseits der äußeren Nahtstelle zylindrisch.

Damit keine statische Überbestimmung entsteht und die Dichtung zwischen den beiden Rohrabschnitten versagt, sollten die äußeren Mantelflächen des ersten und des zweiten Rohrabschnitts um einen Luftspalt voneinander beabstandet sein, insbesondere an der äußeren Nahtstelle. Eine innenliegende Dichtung hat zudem den Vorteil, dass die Koppelmittel (die Gewinde) außerhalb des Strömungskanals liegen und damit einfacher lösbar sind.

Damit eine besonders einfache De-/Montage der beiden Rohrabschnitte gelingt, hat der erste Rohrabschnitt erfindungsgemäß einen höheren Wärmeausdehnungskoeffizienten als der zweite Rohrabschnitt. Da der erste Rohrabschnitt an der Koppelstelle in den zweiten Rohrabschnitt hineinragt, müssen die gewählten Koppelkräfte bei einer Montage bei Raumtemperatur weniger fest gewählt werden. Schäden bei der Montage werden vermieden. Bei der Betriebstemperatur des Materialrohrs verfestigt sich die Kopplung selbstständig durch die höhere thermische Ausdehnung des ersten Rohrabschnitts.

In einer weiteren näheren Ausgestaltung ist im Bereich der Austrittsöffnung des zweiten Rohrabschnitts ein Düsenmundstück vorgesehen. Düsenmundstücke beeinflussen das Ausströmverhalten der fluidisierten Masse aus der Spritzgießdüse. Je nach Angussöffnung und Anwendungsfall ist das Düsenmundstück entsprechend ausgestaltbar, sodass stets qualitativ hochwertige Spritzlinge herstellbar sind.

Auch das Düsenmundstück sollte aus einem gut wärmeleitenden Material bestehen. Nur so lässt sich nämlich das fluidisierte Material bis zum Austreten aus der Spritzgießdüse korrekt temperieren. Zur thermischen Isolation gegenüber der Formplatte trägt das Düsenmundstück gemäß einer Weiterbildung einen Dichtring, wobei das Material des Dichtrings eine geringere Wärmeleitfähigkeit aufweist als das Material des Düsenmundstücks. Nur der Dichtring berührt dann in einem Spritzgießwerkzeug die ein Formnest ausbildende Formplatte, welche auch als kalte Werkzeugseite bezeichnet wird. Der Dichtring kann insbesondere auf das Düsenmundstück aufgeschoben oder aufgeschraubt sein. Ein Wärmeabfluss von dem Düsenmundstück auf die Formplatte wird so weitestgehend verhindert.

Eine besonders gute Wärmeübertragung von der Heizvorrichtung auf das fluidisierte Material gelingt, wenn der zweite Rohrabschnitt einteilig, insbesondere monolithisch, mit dem Düsenmundstück ausgebildet ist.

Alternativ kann das Düsenmundstück in das Materialrohr eingesetzt und zwischen dem ersten und zweiten Rohrabschnitt eingeklemmt sein. Es ist dann aus einem abweichenden, z.B. leichter zu bearbeitenden, Material herstellbar. Außerdem kann das Düsenmundstück bei Verschleiß ohne den zweiten Rohrabschnitt ausgetauscht werden. Bei dieser Alternative sollte das Düsenmundstück aus einem Material hergestellt sein, das einen höheren Wärmeausdehnungskoeffizienten hat als der zweite Rohrabschnitt. Durch die höhere Ausdehnung des innen liegenden Düsenmundstücks wird eine Presspassung bei Betriebstemperatur erzielt und die Wärmeübertragung vom zweiten Rohrabschnitt auf das Düsenmundstück ist besonders hoch. Das Düsenmundstück sollte in dieser Ausführung einen Dichtring ausbilden. Dieser ist dann zwischen den Dichtflächen der Rohrabschnitte einklemmbar. Weiterhin erstreckt sich das Düsenmundstück bei dieser Alternative vorzugsweise wenigstens bis zur Austrittsöffnung des zweiten Rohrabschnitts, um hier in eine Angussöffnung einer Formplatte hineinragen zu können.

Gemäß einer erfindungsgemäßen Variante weist das Düsenmundstück eine Düsenspitze auf. Spritzgießdüsen mit derartigen nicht verschließ- und offenbaren Düsenmundstücken sind besonders kompakt, unanfällig und kostengünstig.

Für bestimmte Anwendungsbereiche sieht eine andere Variante der Erfindung hingegen ein Nadelführungselement vor, dass dem. Düsenmundstück zugeordnet ist. Von einem solchen kann eine Verschlussnadel geführt sein. Durch das Nadelführungselement ist die Verschlussnadel stets korrekt zu einer korrespondierenden (meist zylindrischen) Dichtfläche im Düsenmundstück ausgerichtet. Hierdurch ist die Durchströmung des Düsenmundstücks positiv beeinflusst. Insbesondere wird eine zentrierte Verschlussnadel radial gleichmäßig umströmt.

Eine spezielle nähere Ausgestaltung sieht vor, dass das Nadelführungselement eine Führungswendel aufweist. Diese windet sich dann im Zusammenbau um die Verschlussnadel, welche folglich über den gesamten Umfang sicher geführt wird. Der Verschleiß an der Anlagefläche verteilt sich so gleichmäßig und großflächig, sodass die Lebensdauer hoch ist. Außerdem wird ein sich um die Verschlussnadel windender Strömungskanalabschnitt ausgebildet. Eine lineare Schmelzeorientierung mit am Austritt des Nadelführungselements auftretenden Verbindungslinien zwischen wieder zusammengeführten Schmelzeströmen wird hierdurch verhindert. Damit wird die Qualität der Spritzlinge verbessert.

Ferner wird eine günstige und einfache Herstellung bei einer Fortentwicklung erreicht, bei der das Nadelführungselement in das Materialrohr eingesetzt und zwischen dem ersten und zweiten Rohrabschnitt eingeklemmt ist. Zusätzliche Befestigungsmittel sind mithin nicht erforderlich. Das Nadelführungselement ist außerdem aus einem abweichenden Material herstellbar. Weiterhin kann das Nadelführungselement bei Verschleiß ohne den zweiten Rohrabschnitt ausgetauscht werden. Bei dieser Alternative sollte das Nadelführungselement aus einem Material hergestellt sein, das einen höheren Wärmeausdehnungskoeffizienten hat als der zweite Rohrabschnitt. Durch die höhere Ausdehnung des innen liegenden Nadelführungselements wird eine Presspassung bei Betriebstemperatur erzielt und die Wärmeübertragung vom zweiten Rohrabschnitt auf das Nadelführungselement ist besonders hoch. Dabei sollte das Nadelführungselement einen Dichtring ausbilden. Dieser ist dann zwischen den Dichtflächen der Rohrabschnitte einklemmbar, ggf. zusammen mit dem restlichen Düsenmundstück, das auch als Dichtring ausgebildet ist.

Vorzugsweise ist das Nadelführungselement allerdings einteilig, insbesondere monolithisch, mit dem Düsenmundstück ausgebildet. Dies reduziert die Anzahl der Teile und damit die notwendigerweise zu bearbeitenden Dichtflächen. Dies ist kostengünstig und weniger anfällig gegenüber Undichtigkeiten.

Zur Bewirkung einer guten Wärmeübertragung auf das Materialrohr im Bereich der Austrittsöffnung sollte der zweite Rohrabschnitt wenigstens 1,5 cm lang sein. Bevorzugt ist die Länge des zweiten Rohrabschnitts wenigstens ein Viertel so groß, und besonders bevorzugt wenigstens ein Drittel so groß, wie die Länge des ersten Rohrabschnitts.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Längsschnitt durch eine Spritzgießdüse, bei der ein zweiter Rohrabschnitt einteilig mit einem Düsenmundstück mit Düsenspitze ausgebildet ist;
- Fig. 2: einen Längsschnitt durch den in Fig. 1 gezeigten zweiten Rohrabschnitt mit einem zusätzlichen Dichtungsring;
- Fig. 3: einen Längsschnitt durch eine Spritzgießdüse, bei der ein Düsenmundstück und ein Nadelführungselement zwischen zwei Rohrabschnitten eingeklemmt sind;
- Fig. 4: einen vergrößerten Längsschnitt durch den in Fig. 3 gezeigten zweiten Rohrabschnitt;
- Fig. 5: einen vergrößerten Längsschnitt durch das in Fig. 3 gezeigte Düsenmundstück;
- Fig. 6: eine perspektivische Ansicht eines Nadelführungselementes, wobei die äußere Ringhülle transparent dargestellt ist; und
- Fig. 7: einen Längsschnitt durch einen zweiten Rohrabschnitt, der einteilig mit einem Düsenmundstück ausgebildet ist, in den ein Nadelführungselement eingesetzt ist, und der einen Dichtungsring trägt.

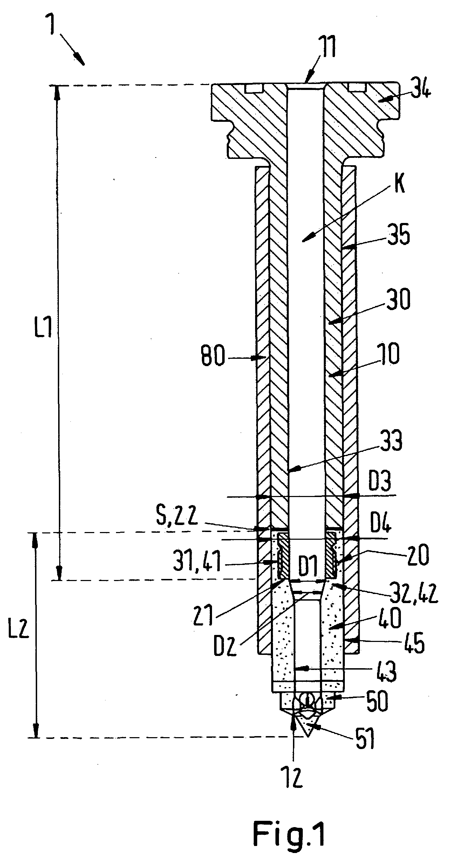

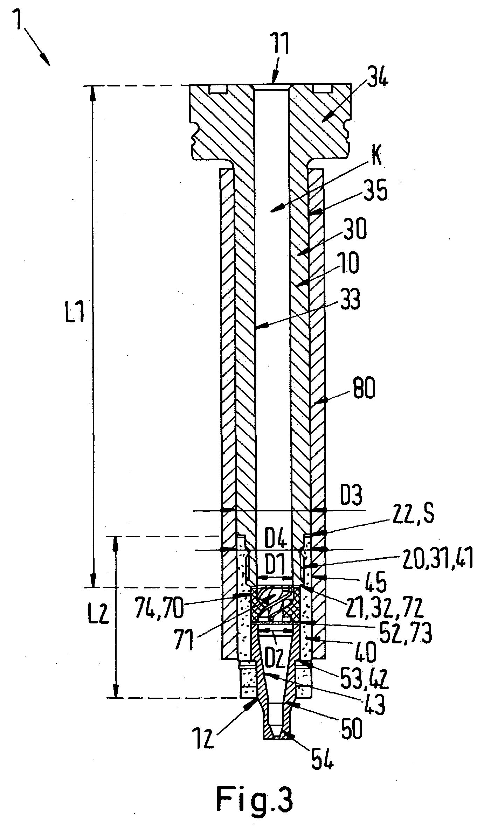

Die Fig. 1 und 3 zeigen jeweils einen Längsschnitt durch eine Spritzgießdüse 1. Diese hat ein Materialrohr 10, das einen Strömungskanal K mit einer Eintrittsöffnung 11 und einer Austrittsöffnung 12 ausbildet. Das Materialrohr 10 besteht aus einem ersten Rohrabschnitt 30 und einem zweiten Rohrabschnitt 40. Die beiden Rohrabschnitte 30, 40 sind an einer Koppelstelle 20 aneinander gereiht und miteinander verbunden. Dabei ist die Eintrittsöffnung 11 am ersten Rohrabschnitt 30 und die Austrittsöffnung 12 am zweiten Rohrabschnitt 40 angeordnet. Der zweite Rohrabschnitt 40 besteht aus einem Material mit höherer Wärmeleitfähigkeit als der erste Rohrabschnitt 30. Außerdem beträgt die Länge 2 des zweiten Rohrabschnitts 40 jeweils wenigsten 25% der Länge L1 des ersten Rohrabschnitts 30.

Man erkennt, dass der erste Rohrabschnitt 30 einen Düsenkopf 34 auf der Seite der Eintrittsöffnung 11 aufweist. Mit diesem Düsenkopf 34 ist die Spritzgießdüse 1 an einer Verteilerplatte eines Verteilers oder einer Maschinendüse festlegbar.

Am gegenüberliegenden Ende des ersten Rohrabschnitts 30 ragt der erste Rohrabschnitt 30 an der Koppelstelle 20 in den zweiten Rohrabschnitt 40 hinein. Insbesondere hat der erste Rohrabschnitt 30 an der Koppelstelle 20 ein Außengewinde 31, das in ein Innengewinde 41 des zweiten Rohrabschnittes 40 eingreift. Der erste Rohrabschnitt 30 verfügt an der Koppelstelle 20 über eine stirnseitige Dichtfläche 32 und/oder der zweite Rohrabschnitt 40 weist eine unmittelbar (Fig. 1) bzw. mittelbar (Fig. 3) korrespondierende Dichtfläche 42 auf.

Die zylindrischen äußeren Mantelflächen 35, 45 des ersten und des zweiten Rohrabschnitts 30, 40 sind um einen Luftspalt S voneinander beabstandet, damit die Anpresskraft der Schraubverbindung auf die Dichtflächen 32, 42 wirkt. Die Schraubverbindung ist zusätzlich dadurch besonders fest, dass der erste Rohrabschnitt 30 einen höheren Wärmeausdehnungskoeffizienten hat als der zweite Rohrabschnitt 40.

Wie man ferner sieht, sind die Innenwandungen 33, 43 des ersten und des zweiten Rohrabschnitts 30, 40 im Bereich der Koppelstelle 20 koaxial zueinander und weisen den gleichen Innendurchmesser D1, D2 auf. Auch die Innenwandungen 33, 43 sind im Wesentlichen zylindrisch, abschnittsweise jedoch auch konisch ausgebildet.

Weiterhin sind die äußeren Mantelflächen 35, 45 des ersten und des zweiten Rohrabschnitts 30, 40 im Bereich der Koppelstelle 20 koaxial zueinander und haben annähernd den gleichen Außendurchmesser D3.

Mit dem Materialrohr 10, insbesondere dem ersten und dem zweiten Rohrabschnitt 30, 40, ist eine Heizvorrichtung 80 thermisch gekoppelt. Die Heizvorrichtung 80 ist als Manschette, insbesondere als Heizungsrohr, Z.B. mit Dickschichtheizer, ausgebildet und aus der Richtung der Austrittsöffnung 12 auf das Materialrohr 10 aufgeschoben. Die Heizvorrichtung berührt dabei den ersten und den zweiten Rohrabschnitt 30, 40, insbesondere deren äußere Mantelflächen 35, 45.

Gemein ist den Ausführungsformen der Fig. 1 und 3 noch, dass im Bereich der Austrittsöffnung 12 des zweiten Rohrabschnitts 40 jeweils ein Düsenmundstück 50 vorgesehen ist. Hinsichtlich dessen Designs unterscheiden sich die Ausführungsformen nach Fig. 1 und 3 jedoch.

Das Düsenmundstück 50 gemäß Fig. 1 verfügt über eine Düsenspitze 51 und radial gleichmäßig um die Düsenspitze 51 verteilte Ausströmkanäle. Weiterhin ist das Düsenmundstück 50 inklusive der Düsenspitze 51 einteilig, insbesondere monolithisch, mit dem zweiten Rohrabschnitt 40 ausgebildet.

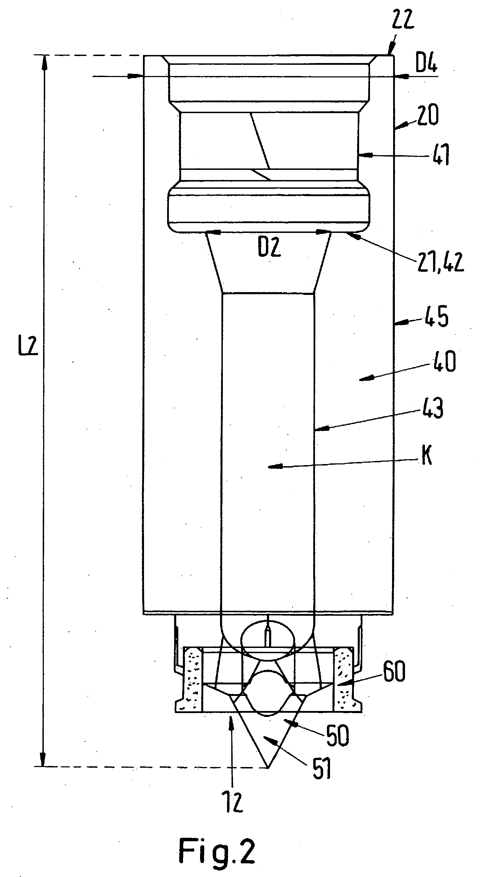

Die in der Beschreibung zu Fig. 1 genannten Merkmale betreffend den zweiten Rohrabschnitt 40 sind auch in Fig. 2 mit Bezugszeichen versehen, die einen vergrößerten Längsschnitt durch den in Fig. 1 gezeigten zweiten Rohrabschnitt 40 zeigt. Ergänzt ist die Darstellung gemäß Fig. 2 um einen zusätzlichen Dichtungsring 60. Dieser wird vom Düsenmundstück 50 bzw. dem zweiten Rohrabschnitt 40 getragen. Der Dichtring 60 ist dabei aus Richtung der Austrittsöffnung 12 auf das Düsenmundstück 50 bzw. den zweiten Rohrabschnitt 40 aufgeschoben und in einen stirnseitig offenen Spalt im Düsenmundstück 50 bzw. dem zweiten Rohrabschnitt 40 eingesteckt. Alternativ kommt auch ein Einpressen, Einstecken, Anschweißen oder Anlöten in Betracht. Der Dichtring 60 besteht aus einem Material, das eine geringere Wärmeleitfähigkeit aufweist als das Material des Düsenmundstücks 50.

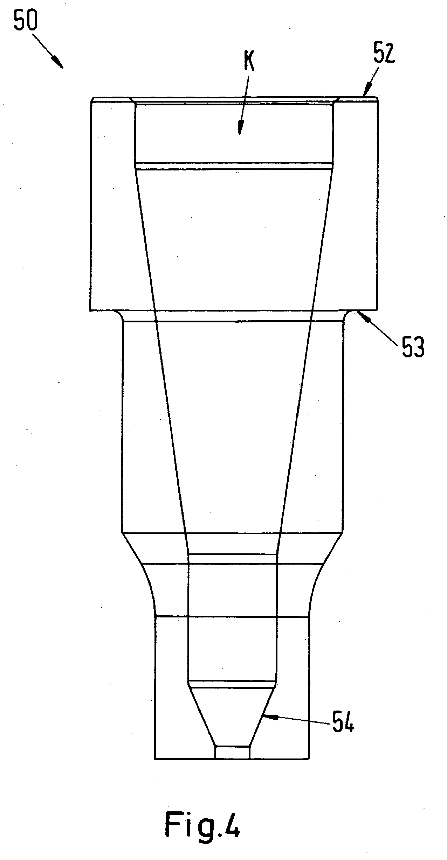

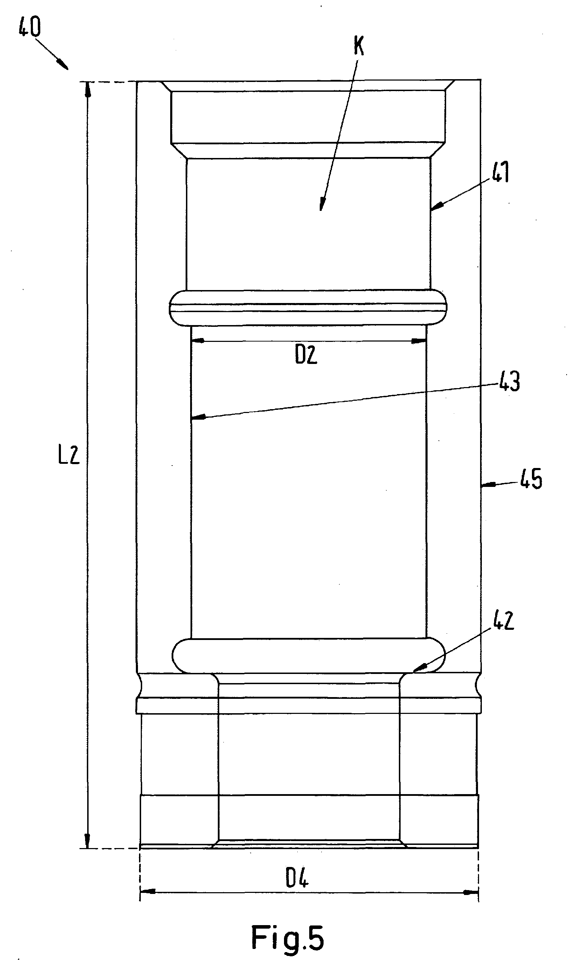

Dahingegen ist dem Düsenmundstück 50 gemäß Fig. 3 ein Nadelführungselement 70 zugeordnet, welches der Aufnahme und Führung einer Verschlussnadel dient. Zunächst ist das Düsenmundstück 50 als separates Teil in das Materialrohr 10, insbesondere den zweiten Rohrabschnitt 40, eingesetzt und zwischen dem ersten und zweiten Rohrabschnitt 30, 40 eingeklemmt. Eine vergrößerte Ansicht des Düsenmundstücks 50 ist Fig. 4 zu entnehmen. Eine vergrößerte Ansicht des zweiten Rohrabschnitts 40 enthält Fig. 5. Zwischen einer ersten Dichtfläche 52 und einer zweiten Dichtfläche 53 ist das Düsenmundstück 50 als Dichtring ausbildet (vgl. Fig. 3 und Fig. 4). Mit der zweiten Dichtfläche 53 liegt das Düsenmundstück 50 in Fig. 3 an der innenliegenden Dichtfläche 42 des zweiten Rohrabschnitts 40 dichtend an. Hierfür ist das Düsenmundstück 50 aus der Richtung der Koppelstelle 20 in den zweiten Rohrabschnitt 40 eingeschoben. Das Düsenmundstück 50 erstreckt sich bis über die Austrittsöffnung 12 des zweiten Rohrabschnitts 40 hinaus. Der durch das Düsenmundstück 50 hindurchführende Strömungskanal K verjüngt sich in Strömungsrichtung und weist endseitig eine zylindrische Nadeldichtfläche 54 auf.

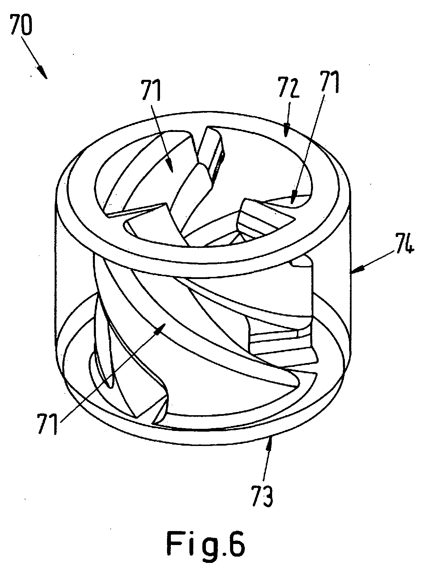

Zusätzlich zum eigentlichen Düsenmundstück 50 ist aus der Richtung der Koppelstelle 20 ein Nadelführungselement 50, wie es vergrößert in Fig. 6 dargestellt ist, in den zweiten Rohrabschnitt 40 eingeschoben. Dieses besteht aus einer Hülse 74 und in der Hülse angeordneten Führungswendeln 71, insbesondere deren drei. Die Hülse 72 ist als Dichtring mit einer ersten Dichtfläche 72 und einer zweiten Dichtfläche 73 ausgebildet. Die erste Dichtfläche 72 liegt im Zusammenbau gemäß Fig. 3 an der stirnseitigen Dichtfläche 32 des ersten Rohrabschnittes 30 an. Gegenüberliegend bildet die zweite Dichtfläche 73 des Nadelführungselements 70 eine Dichtung mit der ersten Dichtfläche 52 des Düsenmundstücks 50.

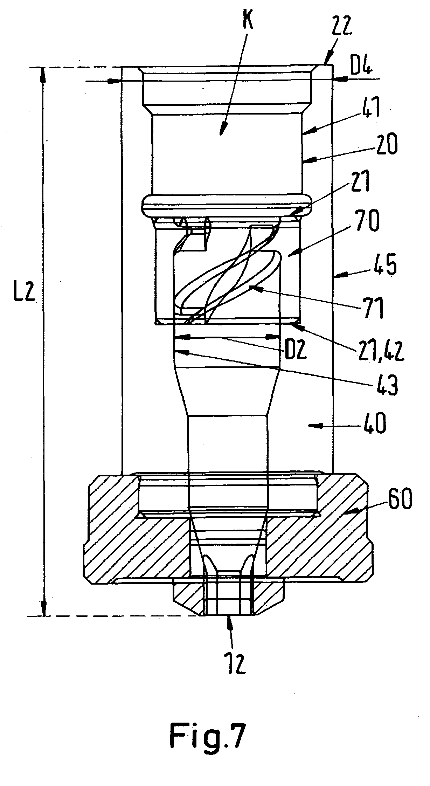

Die Ausführungsform nach Fig. 7 unterscheidet sich derart von den in den Fig. 3 bis 6 gezeigten Ausführungsformen, dass der zweite Rohrabschnitt 40 einteilig, insbesondere monolithisch, mit dem Düsenmundstück 50 ausgebildet ist. Das Nadelführungselement 70 ist wie in Fig.3 in den zweiten Rohrabschnitt 40 eingesetzt. Ein weiterer Unterschied der Ausführungsform nach Fig. 7 liegt in einem zusätzlichen Dichtungsring 60. Dieser wird vom Düsenmundstück 50 bzw. dem zweiten Rohrabschnitt 40 getragen. Der Dichtring 60 ist dabei aus Richtung der Austrittsöffnung 12 auf das Düsenmundstück 50 bzw. dem zweiten Rohrabschnitt 40 aufgeschoben. Die Verbindung zwischen Dichtring 60 und dem Düsenmundstück 50 bzw. dem zweiten Rohrabschnitt 40 kann als Schraub-, Press-, Steck-, Schweiß- oder Lötverbindung ausgeführt sein. Er besteht aus einem Material, das eine geringere Wärmeleitfähigkeit aufweist als das Material des Düsenmundstücks 50.

Die Erfindung ist nicht auf eine der vorbeschriebenen Ausführungsformen beschränkt, sondern in vielfältiger Weise abwandelbar.

So kann unter anderem der in Fig. 2 gezeigte Dichtungsring ohne weiteres an der Spritzgießdüse gemäß Fig. 1 angebracht werden. Ebenso kann ein Dichtungsring nach Fig. 7 mit der Ausführungsform nach Fig. 3 kombiniert werden.

Weiterhin kann das Nadelführungselement in der Ausführung nach Fig. 3 auch einteilig mit dem Düsenmundstück ausgebildet sein. Außerdem besteht zusätzlich oder alternativ die Möglichkeit, auch das Nadelführungselement gemäß der in Fig. 7 gezeigten Ausführungsform mit dem zweiten Rohrabschnitt einteilig auszubilden.

Schließlich könnte anstelle des in Fig. 3 gezeigten Düsenmundstücks und des Nadelführungselements auch ein Düsenmundstück mit einer Düsenspitze (entsprechend der Fig. 1 oder 2) in das Materialrohr eingesetzt werden.

### Bezugszeichenliste

| | | | |
|---|---|---|---|
| 1 | Spritzgießdüse | 52 | erste Dichtfläche |
| | | 53 | zweite Dichtfläche |
| 10 | Materialrohr | 54 | Nadeldichtfläche |
| 11 | Eintrittsöffnung | | |
| 12 | Austrittsöffnung | 60 | Dichtring |
| | | | |
| 20 | Koppelstelle | 70 | Nadelführungselement |
| 21 | innere Nahtstelle | 71 | Führungswendel |
| 22 | äußere Nahtstelle | 72 | erste Dichtfläche |
| | | 73 | zweite Dichtfläche |
| 30 | erster Rohrabschnitt | 74 | Hülse |
| 31 | Außengewinde | | |
| 32 | stirnseitige Dichtfläche | 80 | Heizvorrichtung |
| 33 | erste Innenwandung | | |
| 34 | Düsenkopf | D1 | erster Innendurchmesser |
| 35 | erste äußere Mantelfläche | D2 | zweiter Innendurchmesser |
| | | D3 | erster Außendurchmesser |
| 40 | zweiter Rohrabschnitt | D4 | zweiter Außendurchmesser |
| 41 | Innengewinde | | |
| 42 | Dichtfläche | K | Strömungskanal |
| 43 | zweite Innenwandung | L1 | Länge (erster Rohrabschnitt) |
| 45 | zweite äußere Mantelfläche | L2 | Länge (zweiter Rohrabschnitt) |
| | | S | Luftspalt |
| 50 | Düsenmundstück | | |
| 51 | Düsenspitze | | |

## Patentansprüche

1. Spritzgießdüse (1) umfassend ein Materialrohr (10), das einen Strömungskanal (K) mit einer Eintrittsöffnung (11) und einer Austrittsöffnung (12) ausbildet, und eine Heizvorrichtung (80), die thermisch mit dem Materialrohr (10) gekoppelt ist, wobei das Materialrohr (10) zwei an einer Koppelstelle (20) miteinander verbundene Rohrabschnitte (30, 40) aufweist, wobei die Eintrittsöffnung (11) am ersten Rohrabschnitt (30) und die Austrittsöffnung (12) am zweiten Rohrabschnitt (40) angeordnet ist, und wobei der erste Rohrabschnitt (30) an der Koppelstelle (20) in den zweiten Rohrabschnitt (40) hineinragt, **dadurch gekennzeichnet, dass** der zweite Rohrabschnitt (40) aus einem Material mit höherer Wärmeleitfähigkeit besteht als der erste Rohrabschnitt (30), und dass der erste Rohrabschnitt (30) einen höheren Wärmeausdehnungskoeffizienten hat als der zweite Rohrabschnitt (40).

2. Spritzgießdüse (1) nach Anspruch 1, **dadurch gekennzeichnet, dass** der erste Rohrabschnitt (30) an der Koppelstelle (20) ein Außengewinde (31) aufweist, das in ein Innengewinde (41) des zweiten Rohrabschnittes (40) eingreift.

3. Spritzgießdüse (1) nach einem der Ansprüche 1 oder 2, **dadurch gekennzeichnet, dass** der erste Rohrabschnitt (30) an der Koppelstelle (20) eine stirnseitige Dichtfläche (32) und der zweite Rohrabschnitt (40) eine korrespondierende Dichtfläche (42) aufweist.

4. Spritzgießdüse (1) nach einem der vorhergehenden Ansprüche, **dadurch gekennzeichnet, dass** die Innenwandungen (33, 43) des ersten und des zweiten Rohrabschnitts (30, 40) im Bereich der Koppelstelle (20) koaxial zueinander sind und den gleichen Innendurchmesser (D1, D2) aufweisen.

5. Spritzgießdüse (1) nach einem der vorhergehenden Ansprüche, **dadurch gekennzeichnet, dass** die äußeren Mantelflächen (35, 45) des ersten und des zweiten Rohrabschnitts (30, 40) im Bereich der Koppelstelle (20) koaxial zueinander sind und den gleichen Außendurchmesser (D3, D4) aufweisen.

6. Spritzgießdüse (1) nach einem der vorhergehenden Ansprüche, **dadurch gekennzeichnet, dass** im Bereich der Austrittsöffnung (12) des zweiten Rohrabschnitts (40) ein Düsenmundstück (50) vorgesehen ist.

7. Spritzgießdüse (1) nach Anspruch 6, **dadurch gekennzeichnet, dass** das Düsenmundstück (50) einen Dichtring (60) trägt, wobei das Material des Dichtrings (60) eine geringere Wärmeleitfähigkeit aufweist als das Material des Düsenmundstücks (50).

8. Spritzgießdüse (1) nach einem der Ansprüche 6 oder 7, **dadurch gekennzeichnet, dass** der zweite Rohrabschnitt (40) einteilig mit dem Düsenmundstück (50) ausgebildet ist.

9. Spritzgießdüse (1) nach einem der Ansprüche 6 oder 7, **dadurch gekennzeichnet, dass** das Düsenmundstück (50) in das Materialrohr (10) eingesetzt und zwischen dem ersten und zweiten Rohrabschnitt (30, 40) eingeklemmt ist.

10. Spritzgießdüse (1) nach einem der Ansprüche 6 bis 9, **dadurch gekennzeichnet, dass** das Düsenmundstück (50) eine Düsenspitze (51) aufweist.

11. Spritzgießdüse (1) nach einem der Ansprüche 6 bis 9, **dadurch gekennzeichnet, dass** dem Düsenmundstück (50) ein Nadelführungselement (70) zugeordnet ist.

12. Spritzgießdüse (1) nach Anspruch 11, **dadurch gekennzeichnet, dass** das Nadelführungselement (70) eine Führungswendel (71) aufweist.

13. Spritzgießdüse (1) nach einem der Ansprüche 11 oder 12, **dadurch gekennzeichnet, dass** das Nadelführungselement (70) in das Materialrohr (10) eingesetzt und zwischen dem ersten und zweiten Rohrabschnitt (30, 40) eingeklemmt ist.

14. Spritzgießdüse (1) nach einem der Ansprüche 11 bis 13, **dadurch gekennzeichnet, dass** das Nadelführungselement (70) und das Düsenmundstück (50) einteilig ausgebildet sind.

## Claims

1. Injection moulding nozzle (1) comprising a material pipe (10) that forms a flow channel (K) with an inlet opening (11) and an outlet opening (12), and a heating device (80) that is thermally coupled to the material pipe (10), wherein the material pipe (10) comprises two pipe sections (30, 40) that are connected to each other at a coupling point (20), wherein the inlet opening (11) is arranged on the first pipe section (30) and the outlet opening (12) is arranged on the second pipe section (40), and wherein the first pipe section (30) protrudes into the second pipe section (40) at the coupling point (20), **characterised in that** the second pipe section (40) is made of a material with higher thermal conductivity than the first pipe section (30) and **in that** the first pipe section (30) has a higher thermal expansion coefficient than the second pipe section (40).

2. Injection moulding nozzle (1) according to claim 1, **characterised in that** the first pipe section (30) has an external thread (31) at the coupling point (20) that engages with an internal thread (41) of the second pipe section (40).

3. Injection moulding nozzle (1) according to either claim 1 or claim 2, **characterised in that** the first pipe section (30) has an end face sealing surface (32) at the coupling point (20) and the second pipe section (40) has a corresponding sealing surface (42).

4. Injection moulding nozzle (1) according to any one of the preceding claims, **characterised in that** the internal wallings (33, 43) of the first and second pipe section (30, 40) are arranged coaxially to each other in the region of the coupling point (20) and have the same inner diameter (D1, D2).

5. Injection moulding nozzle (1) according to any one of the preceding claims, **characterised in that** the outer jacket surfaces (35, 45) of the first and second pipe section (30, 40) are arranged coaxially to one another in the region of the coupling point (20) and have the same outer diameter (D3, D4).

6. Injection moulding nozzle (1) according to any one of the preceding claims, **characterised in that** a nozzle mouthpiece (50) is provided in the area of the outlet opening (12) of the second pipe section (40).

7. Injection moulding nozzle (1) according to claim 6, **characterised in that** the nozzle mouthpiece (50) carries a sealing ring (60), wherein the material of the sealing ring (60) has a lower thermal conductivity than the material of the nozzle mouthpiece (50).

8. Injection moulding nozzle (1) according to either claim 6 or claim 7, **characterised in that** the second pipe section (40) is formed in one piece with the nozzle mouthpiece (50).

9. Injection moulding nozzle (1) according to either claim 6 or 7, **characterised in that** the nozzle mouthpiece (50) is inserted into the material pipe (10) and is clamped in between the first and second pipe section (30, 40).

10. Injection moulding nozzle (1) according to any one of claims 6 to 9, **characterised in that** the nozzle mouthpiece (50) comprises a nozzle tip (51).

11. Injection moulding nozzle (1) according to any one of claims 6 to 9, **characterised in that** a needle guide element (70) is allocated to the nozzle mouthpiece (50).

12. Injection moulding nozzle (1) according to claim 11, **characterised in that** the needle guide element (70) comprises a guide spiral (71).

13. Injection moulding nozzle (1) according to either claim 11 or claim 12, **characterised in that** the needle guide element (70) is inserted into the material pipe (10) and clamped in between the first and second pipe section (30, 40).

14. Injection moulding nozzle (1) according to any one of claims 11 to 13, **characterised in that** the needle guide element (70) and the nozzle mouthpiece (50) are formed in one piece.

## Revendications

1. Buse de moulage par injection (1) comprenant un tube de matériau (10), qui forme un canal d'écoulement (K) avec une ouverture d'entrée (11) et une ouverture de sortie (12) et un dispositif de chauffage (80) qui est couplé thermiquement au tube de matériau (10), dans laquelle le tube de matériau (10) présente deux sections de tube (30, 40) reliées l'une à l'autre en un point de couplage (20), dans laquelle l'ouverture d'entrée (11) est ménagée sur une première section de tube (30) et l'ouverture de sortie (12) sur la seconde section de tube (40), et dans laquelle la première section de tube (30) pénètre dans la seconde section de tube (40) au point de couplage (20), **caractérisée en ce que** la seconde section de tube (40) est constituée d'un matériau de conductibilité thermique plus élevée que celle de la première section de tube (30) et la première section de tube (30) possède un coefficient de dilatation thermique plus élevé que celui de la seconde section de tube (40).

2. Buse de moulage par injection (1) selon la revendication 1, **caractérisée en ce que** la première section de tube (30) présente au point de couplage (20) un filet externe (31) qui s'engage dans un filet interne (41) de la seconde section de tube (40).

3. Buse de moulage par injection (1) selon l'une quelconque des revendications 1 ou 2, **caractérisée en ce que** la première section de tube (30) présente au point de couplage (20) une surface d'étanchéité frontale (32) et la seconde section de tube (40) une surface d'étanchéité correspondante (42).

4. Buse de moulage par injection (1) selon l'une quelconque des revendications précédentes, **caractérisée en ce que** les parois internes (33, 43) de la première et de la seconde section de tube (30, 40) sont mutuellement coaxiaux dans la zone du point de couplage (20) et présentent le même diamètre interne (D1, D2).

5. Buse de moulage par injection (1) selon l'une quelconque des revendications précédentes, **caractérisée en ce que** les surfaces d'enveloppe externes (35, 45) de la première et de la seconde section de tube (30, 40) sont mutuellement coaxiales dans la zone du point de couplage (20) et présentent le même diamètre externe (D3, D4).

6. Buse de moulage par injection (1) selon l'une quelconque des revendications précédentes, **caractérisée en ce qu'**il est prévu un orifice de buse (50) dans la zone de l'ouverture de sortie (12) de la seconde section de tube (40).

7. Buse de moulage par injection (1) selon la revendication 6, **caractérisée en ce que** l'orifice de buse (50) porte une bague d'étanchéité (60), dans laquelle le matériau de la bague d'étanchéité (60) présente une conductibilité thermique inférieure à celle du matériau de l'orifice de buse (50).

8. Buse de moulage par injection (1) selon l'une quelconque des revendications 6 ou 7, **caractérisée en ce que** la seconde section de tube (40) est formée d'un seul tenant avec l'orifice de buse (50).

9. Buse de moulage par injection (1) selon l'une quelconque des revendications 6 ou 7, **caractérisée en ce que** l'orifice de buse (50) est inséré dans le tube de matériau (10) et calé entre la première et la seconde section de tube (30, 40).

10. Buse de moulage par injection (1) selon l'une quelconque des revendications 6 à 9, **caractérisée en ce que** l'orifice de buse (50) présente un embout de buse (51).

11. Buse de moulage par injection (1) selon l'une quelconque des revendications 6 à 9, **caractérisée en ce qu'**un élément de guidage à aiguille (70) est affecté à l'orifice de buse (50).

12. Buse de moulage par injection (1) selon la revendication 11, **caractérisée en ce que** l'élément de guidage à aiguille (70) présente une hélice de guidage (71).

13. Buse de moulage par injection (1) selon l'une quelconque des revendications 11 ou 12, **caractérisée en ce que** l'élément de guidage à aiguille (70) est inséré dans le tube de matériau (10) et calé entre la première et la seconde section de tube (30, 40).

14. Buse de moulage par injection (1) selon l'une quelconque des revendications 11 à 13, **caractérisée en ce que** l'élément de guidage à aiguille (70) et l'orifice de buse (50) sont conformés d'un seul tenant.
